# EUROPÄISCHE PATENTSCHRIFT

(11) **EP 3 094 590 B1**
(45) Veröffentlichungstag und Bekanntmachung des Hinweises auf die Patenterteilung: **03.01.2018**
(21) Anmeldenummer: 15700579.4
(22) Anmeldetag: 16.01.2015
(51) Int. Cl.: B67C 7/00, B67C 3/24

(54) **BEHÄLTERBEHANDLUNGSMASCHINE ZUM BEHANDELN VON BEHÄLTERN**
CONTAINER-PROCESSING MACHINE FOR PROCESSING CONTAINERS
MACHINE DE TRAITEMENT DE RÉCIPIENTS POUR TRAITER DES RÉCIPIENTS

(30) Priorität: 17.01.2014 DE 102014100496
(43) Veröffentlichungstag der Anmeldung: 23.11.2016
(73) Patentinhaber: KHS GmbH, 44143 Dortmund (DE)
(72) Erfinder: CLÜSSERATH, Ludwig, 55543 Bad Kreuznach (DE)
(86) Internationale Anmeldenummer: PCT/EP2015/050744
(87) Internationale Veröffentlichungsnummer: WO 2015/107137

(56) Entgegenhaltungen:
- WO-A1-2015/067406
- DE-A1- 2 558 886
- DE-B- 1 128 774
- FR-A- 1 042 566
- US-A- 2 782 897
- US-A- 4 266 653

## Beschreibung

Die Erfindung bezieht sich auf eine Behälterbehandlungsmaschine gemäß dem Oberbegriff des Anspruchs 1.

Gattungsgemäße Behälterbehandlungsmaschinen, insbesondere in Form von Füllmaschinen zum Füllen von Behältern mit einem flüssigen Füllgut, auch in ihrer Ausbildung als Rundläufer, sind in verschiedenen Ausführungen bekannt. Bei diesen bekannten Maschinen, die in der Regel für sehr hohe Leistungen (Anzahl der behandelten bzw. gefüllten Behälter je Zeiteinheit) konzipiert sind, sind üblicherweise am Umfang eines um eine vertikale Rotationsachse umlaufenden Transportelements, z.B. Rotors, Bearbeitungsstationen, z.B. Füllstationen, gebildet, an welche die Behälter jeweils einzeln übergeben werden. Die Behälter werden dem Transportelement an einem Behältereinlauf, in der Regel von einem Förderer zugeführt und die bearbeiteten z.B. gefüllten Behälter werden dem Transportelement an einem Behälterauslauf entnommen werden. An den Bearbeitungsstationen können die Behälter wahlweise dem Transportelement entnommen werden. Die Behandlungsstationen können stationär sein, oder über einen Teilkreis mit dem Transportelement mitbewegt werden. So können z.B. Füllstationen bildende Füllelemente zur gesteuerten Abgabe des Füllgutes in die Behälter über einen Teilkreis mit dem Transportelement mitbewegt werden.

Ein Behälterbehandlungsmaschine der gattungsgemäßen Art ist aus der DE 25 58 886 oder der DE 10 2008 018 516 bekannt. Ein Nachteil der bekannten Behälterbehandlungsmaschine besteht darin, dass die Maschine für unterschiedliche Behandlungen von Behältern oder für die Behandlung unterschiedlicher Behälter umgerüstet werden muss, was aufwendig ist und regelmäßig eine Betriebsunterbrechung nach sich zieht.

Eine weitere Behälterbehandlungsmaschine wurde durch die DE 195 13 103 A1 bekannt. Diese Schrift stellt eine Behälterbehandlungsmaschine vor, bei welcher Behälter durch einen, durch einen Servomotor angetriebenen Transferstern zunächst zu einer Füllvorrichtung und anschließend zu einer Wägevorrichtung bewegt werden. Um ein berührungsfreies Wägen der Behälter oder aber auch ein Schütteln der Behälter zu ermöglichen, sieht diese Schrift mehr im Detail vor, den Transferstern in unterschiedliche Drehrichtungen zu bewegen, also die Drehrichtung des Transfersternes zu ändern. Nachteilig an dieser Vorrichtung ist, dass sie Behälterbehandlungsstationen lediglich an einer Hälfte des Transfersternes vorsieht und ebenfalls nur die Behandlung eines Behältertyps offenbart. Die WO 2015/067406 A1 wurde am 14. Mai 2015 veröffentlicht (Artikel 54(3) EPÜ) und offenbart eine Behälterbehandlungsmaschine, wobei die Drehrichtung eines Transportelements wählbar ist, und in einer ersten Drehrichtung des Transportelements jeweils zwischen einem Behältereinlauf und einem Behälterauslauf eine erste Behälter-Behandlungsstrecke mit ersten Behandlungsstationen gebildet ist, und wobei in einer der ersten Drehrichtung entgegengesetzten zweiten Drehrichtung des Transportelements jeweils zwischen dem Behältereinlauf und dem Behälterauslauf eine zweite Behälter-Behandlungsstrecke mit zweiten Behandlungsstationen gebildet ist, wobei die zweiten Behandlungsstationen identisch mit den ersten Behandlungsstationen ausgebildet sind.

Es ist daher Aufgabe der Erfindung, eine Behälterbehandlungsmaschine zu schaffen, die flexibler in der Behandlung von Behältern ist und/oder die die Behandlung unterschiedlicher Behälter ohne Umbau ermöglicht.

Die Aufgabe wird mit einer Behälterbehandlungsmaschine gemäß Anspruch 1 gelöst. Vorteilhafte Weiterbildungen der Erfindung sind Gegenstand der abhängigen Ansprüche.

"Behälter" sind im Sinne der Erfindung insbesondere Dosen und Flaschen, jeweils aus Metall, Glas und/oder Kunststoff, insbesondere PET-Flaschen und Kegs, aber auch andere Packmittel, insbesondere auch solche, die zum Abfüllen von pulverförmigen, granulatartigen, flüssigen oder viskosen Produkten geeignet sind.

Der Ausdruck "im Wesentlichen" bzw. "etwa" bzw. "ca." bedeutet im Sinne der Erfindung Abweichungen vom jeweils exakten Wert um +/- 10%, bevorzugt um +/- 5% und/oder Abweichungen in Form von für die Funktion unbedeutenden Änderungen. Die erfindungsgemäße Behälterbehandlungsmaschine ist zum Behandeln von Behältern ausgebildet. Unter "Behandeln" wird in unter anderem Füllen der Behälter mit Schüttgut oder flüssigem Gut verstanden, das Vorbehandeln, z.B. Desinfizieren oder Verschließen des Behälters, z.B. mit einem Schraubverschluss, einem Kronkorken oder einem Siegelverschluss.

Die Behälterbehandlungsmaschine, nachfolgend kurz "Maschine" genannt, hat wenigstens ein Behälteraufnahmen aufweisendes Transportelement, welches um eine Rotationsachse (MA) drehbar angetrieben ist.

Das Transportelement ist üblicherweise als Transferstern oder -rad ausgebildet, welches in seinem Umfang Ausnehmungen aufweist, in welchem die Behälteraufnahmen ausgebildet sind oder welche die Behälteraufnahmen bilden. Das Transportelement kann jedoch beliebige Geometrien haben.

Die dem Transportelement über einen Behältereinlauf zugeführten zu behandelnden Behälter werden durch die Drehung des Transportelements zu mehreren Behandlungsstationen gefördert, die üblicherweise mit dem Transportelement nicht mit bewegt sind. Dem steht nicht entgegen, dass eine Behandlungsstation, z.B. eine Füllstation, über einen Teilkreis zusammen mit dem Transportelement bewegbar sein kann, um so z.B. ein langsameres Füllen bei hoher Taktfrequenz oder Drehgeschwindigkeit des Transportelements zu erlauben. Die Behandlungsstationen sind regelmäßig stationär oder sind an anderen bewegten Bearbeitungsvorrichtungen ausgebildet, z.B. an einem weiteren Behandlungsstern mit mehreren Stationen. Nach der Behandlung an den Behandlungsstationen werden die Behälter mittels der Drehung des Transportelements zu einem Behälterauslauf gefördert, von wo aus die Behälter weiter gefördert werden. Die Drehrichtung des Transportelementes ist wählbar. So ist in einer ersten Drehrichtung des Transportelements zwischen dem Behältereinlauf und dem Behälterauslauf eine erste Behälter-Behandlungsstrecke mit ersten Behandlungsstationen gebildet und weiterhin ist in einer der ersten Drehrichtung entgegengesetzten zweiten Drehrichtung des Transportelements zwischen dem Behältereinlauf und dem Behälterauslauf eine zweite Behälter-Behandlungsstrecke mit zweiten Behandlungsstationen gebildet, wobei sich die ersten Behandlungsstationen von den zweiten Behandlungsstationen unterscheiden. Die Erfindung ermöglicht es, in Abhängigkeit von der Drehrichtung des Transportelements unterschiedliche Behandlungen von Behältern vorzunehmen. Zum Beispiel können sich die ersten Behandlungsstationen von den zweiten darin unterscheiden, dass unterschiedliche Stoffe abgefüllt und die Behälter danach entsprechend unterschiedlich verschlossen werden. Oder die ersten Behandlungsstationen sind zum Füllen und Verschließen erster Behälter, z.B. PET-Flaschen ausgebildet, während die zweiten Behandlungsstationen zum Befüllen anderer zweiter Behälter z.B. Glasflaschen oder Kegs oder Dosen, ausgebildet sind. Dies hat den Vorteil, dass mit einer Maschine ohne umfangreichen Umbau zwei unterschiedliche Behälter bzw. Behältersorten behandelbar, z.B. vorbehandelbar, befüllbar und verschließbar sind. In Abhängigkeit vom Wechsel der Behältersorte kann gelegentlich auch der Wechsel des Transportelementes erforderlich sein.

Vorzugsweise sind die ersten Behandlungsstationen für die Behandlung erster Behälter und die zweiten Behandlungsstationen für die Behandlung zweiter Behälter ausgebildet, welche sich von den ersten Behältern unterscheiden. Auf diese Weise können mit der Maschine zwei unterschiedliche Behälter häufig ohne Umbau der Maschine und ohne Betriebsunterbrechung befüllt und gegebenenfalls verschlossen werden. In manchen Fällen ist lediglich ein Austausch des Transportelementes erforderlich.

In einer vorteilhaften Weiterbildung der Erfindung haben die Behälteraufnahmen des Transportelements Aufnahmeelemente für die Aufnahme zumindest der ersten und zweiten Behälter. Auf diese Weise muss auch das Transportelement nicht umgebaut werden, um unterschiedliche Behälter zu fördern.

Vorzugsweise haben daher die ersten Behandlungsstationen Vorbehandlungs-, Füll- und/oder Verschließstationen für die ersten Behälter und zweiten Behandlungsstationen Vorbehandlungs-, Füll- und/oder Verschließstationen für die zweiten Behälter.

In einer vorteilhaften Weiterbildung der Erfindung sind die ersten und zweiten Behandlungsstationen austauschbar in der Behälterbehandlungsmaschine gehalten. Auf diese Weise lässt sich zusätzlich zur hohen Variabilität der Maschine aufgrund deren unterschiedlicher Arbeitsweise in beiden Drehrichtungen des Transportelements ein schneller Umbau der Maschine realisieren, um so z.B. Sonderbehandlungen in Kleinserien ohne große Betriebsunterbrechung durchführen zu können.

In diesem Sinne sind dann vorzugsweise die ersten und zweiten Behandlungsstationen als lösbar an der Behälterbehandlungsmaschine gehaltene Funktionsmodule ausgebildet.

Vorzugsweise hat die Maschine Mittel, mit denen die Behälter während der Behandlung an den ersten und/oder zweiten Behandlungsstationen außer Eingriff mit dem Transportelement gebracht werden können. Es lassen sich dadurch Behandlungen durchführen, die eine längere Zeit benötigen als aufgrund der Taktung oder Rotationsgeschwindigkeit des Transportelements möglich wäre.

Vorzugsweise hat wenigstens eine Behandlungsstation einen von einer Hubeinrichtung betätigten Behälterträger, der zum Anheben und Absenken des Behälters zwischen einer unteren Position und einer oberen Position gesteuert bewegbar ist, wobei der Behälterträger beispielsweise für eine hängende Halterung des jeweiligen Behälters einen Behälterhalsring und/oder eine Standfläche für einen Behälterboden aufweist. Auf diese Weise lassen sich auf einfache Weise unterschiedliche Behälter handhaben.

Vorzugsweise ist das Transportelement als Transport- oder Transferstern ausgebildet, der an seinem Umfang mehrere taschenartige und umfangsseitig offene Behälteraufnahmen aufweist, die bezogen auf die Rotationsachse in gleichen Winkelabständen voneinander vorgesehen sind. Ein derartiges Transportelement hat sich im Betrieb auch bei hohen Taktraten als zuverlässig erwiesen.

Vorzugsweise sind bei der Maschine der Behältereinlauf und der Behälterauslauf von Abschnitten eines Transportbandes, vorzugsweise von Abschnitten eines gemeinsamen unter dem Transportelement hindurchgeführten Transportbandes gebildet, wobei vorzugsweise die senkrechte Mittelebene des gemeinsamen unter dem Transportelement hindurchgeführten Transportbandes die Rotationsachse (MA) einschließt.

Vorzugsweise sind die ersten und zweiten Behandlungsstationen als PET-Flaschenfüller, Keg-Füller, Glasflaschenfüller oder Dosenfüller ausgebildet. Vorzugsweise können zumindest ein Teil der ersten und zweiten Behandlungsstationen als Schraubverschließer, Kronkorker oder Siegelstationen ausgebildet. Mit derartigen Behandlungsstationen lässt sich eine große Palette an unterschiedlichen Behältern in einer Maschine ohne Umbau behandeln. So können z.B. in der ersten Drehrichtung des Transportelements Glasflaschen und PET-Flaschen bearbeitet werden, während in der zweiten Drehrichtung Dosen und Kegs befüllbar sind. Auf der ersten Behälterbehandlungsstrecke sind daher alle Füll und Verschließstationen für Glas- und PET-Flaschen angeordnet, während auf der zweiten Behälterbehandlungsstrecke alle Füll- und Verschließstationen für Dosen und Kegs angeordnet sind. Die Anzahl der Behandlungsstationen auf den beiden Behälterbehandlungsstrecken sollte aus steuerungstechnischen Gründen eher gleich sein, kann aber auch unterschiedlich sein.

Der Durchsatz an Behältern lässt sich in einer Anordnung zum Behandeln von Behältern erhöhen, die wenigstens zwei in einer Förderstrecke parallel geschaltete Behandlungsmaschinen der vorstehend genannten Art haben. In der Förderstrecke sind dann vor und hinter den Behälterbehandlungsmaschinen Weichen vorgesehen, um die Behälterströme auf die Maschinen aufzuteilen.

Die Erfindung betrifft ebenfalls ein Verfahren zum Behandeln von Behältern, beispielsweise zum Füllen von Behältern mit einem Füllgut, gemäß Anspruch 16. Hierbei werden die zu behandelnden Behälter mit einem um eine, insbesondere vertikale, Rotationsachse drehbar angetriebenen und Behälteraufnahmen aufweisenden Transportelement zu Behandlungsstationen gefördert, die vorzugsweise mit dem Transportelement nicht mitbewegt werden. Die Drehrichtung des Transportelementes ist wählbar. So ist in einer ersten Drehrichtung des Transportelements zwischen dem Behältereinlauf und dem Behälterauslauf eine erste Behälter-Behandlungsstrecke mit ersten Behandlungsstationen gebildet, während in einer der ersten Drehrichtung entgegengesetzten zweiten Drehrichtung des Transportelements zwischen dem Behältereinlauf und dem Behälterauslauf eine zweite Behälter-Behandlungsstrecke mit zweiten Behandlungsstationen gebildet ist. Die ersten Behandlungsstationen unterscheiden sich von den zweiten Behandlungsstationen, weshalb durch die Steuerung der Drehrichtung des Transportelements gesteuert wird, wie Behälter behandelt werden oder ob erste oder zweite Behälter behandelt werden.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an einem Ausführungsbeispiel näher erläutert. Es zeigen:
Fig. 1 in sehr schematischer Darstellung und in Draufsicht eine Behälterbehandlungsmaschine in Form einer Füllmaschine zum Füllen von zwei unterschiedlichen Behältern, nämlich einerseits von Flaschen und andererseits von Dosen und Kegs mit einem flüssigen Füllgut;
Fig. 2 in vereinfachter Darstellung und in Seitenansicht eine als Füllstation ausgebildete erste Behandlungsstation für Flaschen aus der Füllmaschine der Figur 1;
Fig. 3 eine Darstellung wie Figur 2 einer als Füllstation ausgebildeten zweiten Behandlungsstation für Dosen und Kegs aus der Füllmaschine der Figur 1.

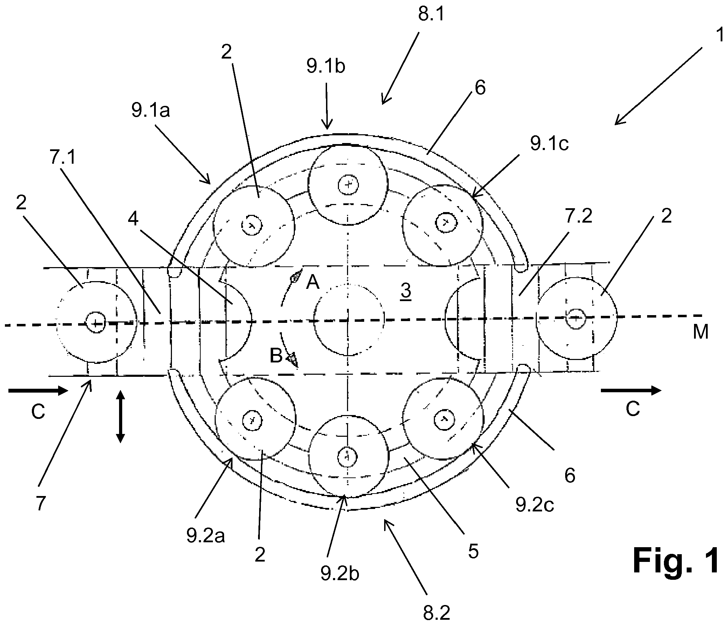

Zentrales Element der in Figur 1 allgemein mit 1 bezeichneten und als Füllmaschine zum Füllen von ersten Behältern 2 in Form von Flaschen oder Dosen ausgebildeten Behälterbehandlungsmaschine ist ein Transportelement in Form eines Transfersterns 3, der um eine vertikale Rotationsachse MA gesteuert drehbar ist, und zwar in Drehschritten mit sich ändernder Drehrichtung, wie dies mit den Pfeilen A und B angedeutet ist und nachstehend noch näher beschrieben wird.

Am Umfang ist der Transferstern 3 mit taschenartigen Behälteraufnahmen 4 versehen, die umfangsseitig offen und vorzugsweise um die Rotationsachse MA in einem gleichen Winkelabstand (Teilung oder Teilungsabstand) aufeinander folgend vorgesehen sind. Bei der dargestellten Ausführungsform weist der Transferstern insgesamt acht Behälteraufnahmen 4 auf. Die Anzahl dieser Behälteraufnahmen 4 kann hiervon aber auch abweichen.

Die Behälterbehandlungsmaschine hat neben dem Transferstern 3 eine kreisringförmige und mit ihrer Achse achsgleich mit der Rotationsachse MA angeordnete Gleitleiste 5, auf der die Behälter 2 mit ihrem Behälterboden 2.1 gleitend aufstehen, sowie seitliche bogenförmige Behälterführungen 6. Ein Transportband 7, welches unter dem Transferstern 3 hindurchgeführt ist, bildet mit einem Abschnitt einen Behältereinlauf 7.1, dem die zu behandelnden bzw. leeren Behälter 2 in der Transportrichtung C zugeführt werden, und mit einem Abschnitt einen Behälterauslauf 7.2, an dem die behandelten bzw. gefüllten Behälter 2 in der Transportrichtung C abgeführt werden.

Mit M ist eine vertikale Mittelebene bezeichnet, die die Rotationsachse MA einschließt sowie auch die Mittelebene des Transportbandes 7. Sie bildet in der vorliegenden Ausführungsform auch die Symmetrieachse der Maschine 1. In Abhängigkeit von der Drehrichtung sind an der Maschine zwischen dem Behältereinlauf 7.1 und dem Behälterauslauf 7.2 zwei jeweils kreisbogenförmige Behälter-Behandlungsstrecken 8.1 und 8.2 gebildet, und zwar bei der für die Figur 1 gewählten Darstellung eine erste Behälter-Behandlungsstrecke 8.1 oberhalb der Mittelebene M entsprechend der Drehrichtung A des Transfersterns 3 und eine zweite Behälter-Behandlungsstrecke 8.2 unterhalb der Mittelebene M entsprechend der Drehrichtung B des Transfersterns 3.

In der ersten Behälter-Behandlungsstrecke 8.1 sind drei erste Behandlungsstationen 9.1 a,b,c zum Füllen von Flaschen angeordnet, während in der zweiten Behälter-Behandlungsstrecke 8.2 drei zweite Behandlungsstationen 9.2 a,b,c angeordnet sind, die zum Füllen von Dosen und Kegs ausgebildet sind. Somit können in Abhängigkeit von der Drehrichtung entweder Flaschen (Drehrichtung A) oder Dosen und Kegs (Drehrichtung B) befüllt (und verschlossen) werden. Vorzugsweise sind alle Behandlungsstationen 9.1a,b,c und 9.2a,b,c zum Füllen von Behältern ausgebildet.

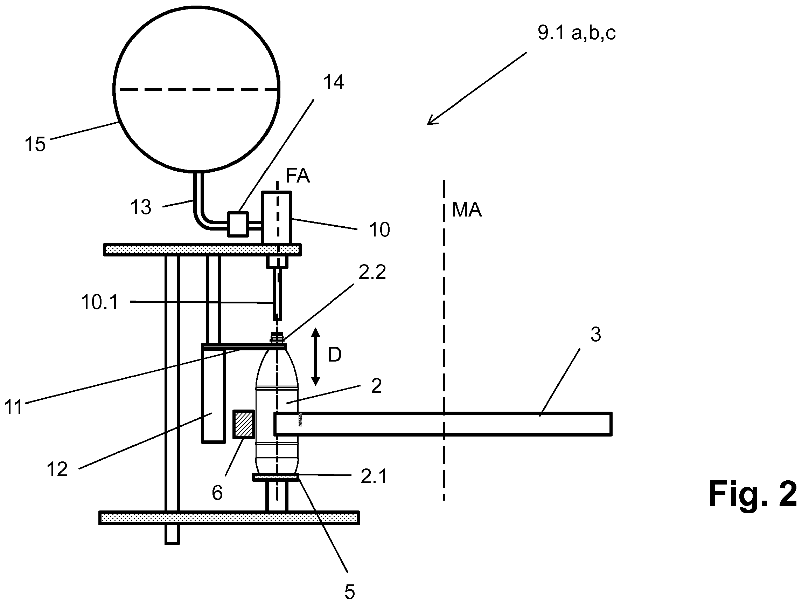

Eine erste Behandlungsstation 9.1a,b,c in der ersten Behälter-Behandlungsstrecke 8.1 in Form einer Füllstation zum Füllen von Flaschen 2a mit flüssigem Füllgut ist beispielsweise in Fig. 2 dargestellt.

Sie umfasst u.a. einen Behandlungskopf in Form eines Füllelementes 10 mit Füllrohr 10.1, dessen Achse eine vertikale Füllelementachse FA ist, einen Behälterträger 11, der für eine hängende Halterung jeweils einer Flasche 2a an einem unterhalb seiner Behältermündung vorgesehenen Halsring 2.2 ausgebildet und mit einem Hubelement 12 in der Füllelementachse FA parallel zur Rotationsachse MA gesteuert anhebbar und absenkbar ist (Doppelpfeil D), und zwar aus einer unteren Hubposition, in der der betreffende Behälter 2 mit seinem Behälterboden auf der Gleitleiste 5 aufstehend mit einem Teil seines Umfangs in einer Behälteraufnahme 4 aufgenommen ist und die Behälteröffnung von dem unteren Ende des Füllrohres 10.1 beabstandet ist, und einer oberen Hubposition, in der das Füllrohr 10.1 durch die Behälteröffnung in den Innenraum der Flasche 2a hineinreicht und in der die Flasche 2a soweit angehoben ist, dass sie sich vollständig oberhalb des Transfersternes 3 bzw. außerhalb der Behälteraufnahmen 4 befindet. Das Füllelement 10 ist über eine eigene Produktleitung 13 mit Durchflussmesser 14 mit einem für sämtliche Behandlungsstationen 9 gemeinsamen Füllgutkessel 15 verbunden, der während des Füllbetriebes mit dem flüssigen Füllgut gefüllt ist. Es ist auch möglich in der ersten Behälter-Behandlungsstrecke 8.1 zwei Füllstationen und zwei Verschließstationen für die gefüllten Flaschen vorzusehen. in diesem Fall hätte der Transferstern 3 acht Behälteraufnahmen 4. Es können auch auf jeder der beiden Behälter-Behandlungsstrecken 8.1 und 8.2 drei Füllstationen angeordnet sein. Die ersten und zweiten Behandlungsstationen 9.1 und 9.2 sind in diesem Fall an der ersten und zweiten Behälter-Behandlungsstrecke 8.1 und 8.2 weiterhin so angeordnet, dass deren Füllelementachsen FA bezogen auf die Rotationsachse MA einen Winkelabstand voneinander aufweisen, der gleich dem Teilungsabstand der Behälteraufnahmen 4 ist und außerdem der Winkelabstand der dem Behältereinlauf 7.1 benachbarten Füllelementachse FA von der Mittelebene M sowie der Winkelabstand der dem Behälterauslauf 7.2 benachbarten Füllelementachse FA von der Mittelebene M jeweils gleich einem Teilungsabstand zweier Behälteraufnahmen 4 ist.

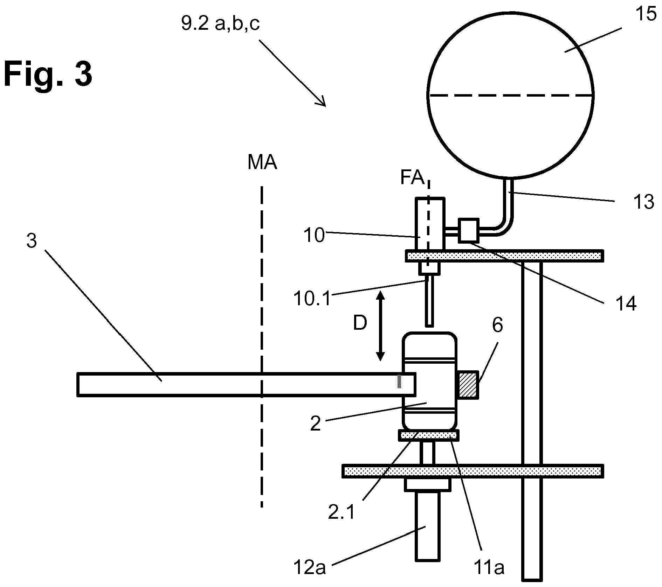

Die Figur 3 zeigt in schematischer Darstellung eine der als Füllstation ausgebildeten zweiten Behandlungsstationen 9.2a.b.c auf der zweiten Behälter-Behandlungsstrecke 8.2 entsprechend der Drehrichtung B des Transfersterns 3 zum Befüllen von Dosen, beispielsweise Party-Dosen und Kegs. Hierbei bildet die Gleitleiste 5 im Bereich der Behandlungsstationen 9a einen kreissegmentartigen Behälterträger 11a, auf dem die Dosen 2b mit ihrem Boden 2.1 aufstehen und mit dem die Dosen 2b entsprechend dem Doppelpfeil D durch eine Hubeinrichtung 12a zwischen einer unteren Hubposition, in der sich die jeweilige Dose 2b in einer Behälteraufnahme 4 und mit Abstand unterhalb des Füllrohres 10.1 befindet, und einer oberen Hubposition bewegbar ist, in der die Dose 2b beispielsweise wiederum in Dichtlage am Füllelement 10 angeordnet soweit angehoben ist, dass sie sich außerhalb der Behälteraufnahmen 4 befindet. Alternativ ist es auch möglich, die Behälter nach unten aus dem Transferstern 3 heraus zu bewegen und die Behälter dann an einer unterhalb der Transportebene angeordneten Behandlungsstation angedockt werden. Der Transportstern 3 wäre dann oberhalb des abgesenkten Behälters frei drehbar.

Der Durchmesser des Transfersternes 3 ist derart bemessen, dass er für die Flaschen-Füllstationen 9.1a,b,c passt als auch für die Dosen-Füllstationen 9.2a,b,c. So sollten die Dosen 2b zwar noch ausreichend in Behälteraufnahmen 4 aufgenommen sein, die Hubstange des Hubelementes 12a aber auch in der oberen Hubstellung des Behälterträgers 5a nicht mit dem Transferstern 3 kollidieren. Diese in der Figur 3 dargestellte Ausführungsform eignet sich insbesondere auch zum Füllen von Dosen 2b in Form sogenannter Party-Dosen.

Mit der erfindungsgemäßen Behälterbehandlungsmaschine 1 gemäß den Figuren 1 bis 3 lassen sich somit im Wesentlichen allein durch Wechsel der Drehrichtung des Transfersterns 3 Flaschen 2a, z.B. Glas- oder PET-Flaschen als auch Dosen 2b und Kegs befüllen, ohne die Maschine umzubauen oder anzuhalten. Lediglich in manchen Fällen ist ein schnell durchzuführender Austausch des Transfersterns 3 erforderlich.

Wesentliche Vorteile der erfindungsgemäßen Behälterbehandlungsmaschine oder Füllmaschine, auch gegenüber herkömmlichen Füllmaschinen u.a. sind:
- Befüllen unterschiedlicher Behälter allein durch Steuerung der Drehrichtung des Transfersterns
- unterschiedliche Behandlung von Behältern entsprechend der Drehrichtung des Transfersterns möglich
- Vereinfachter, kompakter und kostengünstiger Rotationsaufbau;
- Reduzierter Platzbedarf;
- Schneller Wechsel zwischen verschiedenen Behältertypen;

Weiterhin entfällt durch die stationäre Anordnung der Behandlungsstationen 9.1a,b,c , 9.2a,b,c sowie der Füllelemente 10 die Notwendigkeit der Übertragung von Medien, Energien und Signalen zwischen dem Maschinengestell und einem Rotor bzw. an diesem Rotor ausgebildeten Behandlungsstationen und es kann auf folgende Funktionsbaugruppen üblicher Behälterbehandlungs- oder Füllmaschinen verzichtet werden:
- Hauptantrieb für einen Rotor;
- Kugeldrehverbindung zwischen Rotor und Maschinengestell;
- Medien- Drehverteiler für Füllgut und sterile gas- und oder dampfförmige Medien;
- Medien-Drehverteiler für Pneumatik zur Ansteuerung von Füllelementen und/oder Steuerventilen;
- Schleifringe und Schleifringverteiler für elektrische Energieversorgung und/oder elektrische Mess- und Steuersignale;
- Drehmomentstützen.

Mit dem erfindungsgemäßen Prinzip einer als Füllmaschine ausgebildeten Behälterbehandlungsmaschine 1 lassen sich in der Praxis zufriedenstellende Füllleistungen erreichen. So ist bei einer Anordnung von beispielsweise jeweils acht als Füllstationen ausgebildeten Behandlungsstationen 9.1a,b,c, 9.2a,b,c an beiden Behälter-Behandlungsstrecken 8.1 und 8.2 bei der Abfüllung von Bier in Flaschen oder Dosen mit jeweils einem Füllvolumen von 0,5 Liter eine Leistung bis zu 3000 Flaschen oder Dosen je Stunde erreichbar. Der Durchmesser des Transfersternes 3 beträgt bei dieser Ausführung dann lediglich 800 mm.

Die Erfindung wurde voranstehend an Ausführungsformen beschrieben. Es versteht sich, dass weitere Änderungen sowie Abwandlungen möglich sind, ohne dass dadurch der der Erfindung zugrundeliegende Erfindungsgedanke verlassen wird.

Die Erfindung wurde voranstehend an einer Behälterbehandlungsmaschine 1 in Form einer Füllmaschine erläutert. Grundsätzlich kann die erfindungsgemäße Behälterbehandlungsmaschine 1 aber auch für andere Arten der Behandlung von Behältern 2 ausgeführt sein, beispielsweise zum Sterilisieren und/oder Verschließen von Behältern 2.

Für die Ausführung der erfindungsgemäßen Behälterbehandlungsmaschine 1 zum Verschließen von Behältern 2 bieten sich insbesondere zwei Varianten an. Für eine erste Variante ist vorgesehen, eine Verschließvorrichtung am Behälterauslauf 7.2 anzuordnen. Beim getakteten Rausdrehen der gefüllten Behälter 2 wird in der Belade-/Entladestellung des Transfersterns 3 am Behältereinlauf 7.1 auf der Beladeseite ein neuer, leerer Behälter in eine freie Behälteraufnahme 4 des Transferstern 3 eingeschoben. Gleichzeitig wird am Behälterauslauf 7.2 auf der Abgabeseite ein voller Behälter 2 auf dem Transportband 7 positioniert. Vorzugsweise wird dieser Behälter 2 in dieser Position kurzzeitig fixiert. Auf jeden Fall jedoch wird der Behälter 2 jedoch, wenn er sich in dieser Position befindet mit Hilfe einer dort angeordneten, vorzugsweise einstempeligen Verschließvorrichtung verschlossen. Die Freigabe des Behälters 2 zum Abtransport erfolgt erst nach dem Verschließen. Nach erfolgtem Abtransport des Behälters 2 können weitere Rotationen des Transfersternes 3 erfolgen.

Für eine zweite Variante ist vorgesehen, dass eine erste Behälterbehandlungsstrecke (8.1, 8.2) mit Füllelementen, und eine zweite Behälterbehandlungsstrecke (8.1, 8.2) mit Verschließelementen ausgestattet ist. Sind nun alle auf der ersten Behälterbehandlungsstrecke (8.1, 8.2) angeordneten Behälter 2 vollständig befüllt, werden diese befüllten Behälter 2 durch Rotation des Transfersternes 3 vollständig in die zweite Behälterbehandlungsstrecke (8.1, 8.2) überführt, wo die Behälter 2 durch die dort angeordneten Verschließelemente verschlossen werden.

Vorzugsweise geschieht dieses getaktet, wobei die Füllstellen der ersten Behälterbehandlungsstrecke (8.1, 8.2) durch den Transferstern 3 gleichzeitig mit neuen, leeren Behältern 2 beladen werden. Während nun die Behälter 2 im Füllbereich angehoben und befüllt werden, bleibt genügend Zeit die sich auf der Verschließerseite befindlichen Behälter zu verschließen und danach rückwärts aus der Maschine in Richtung des Behälterauslaufes 7.2 zu befördern. Bis die Befüllung der neuen Behälter 2 abgeschlossen ist und diese anschließend in die Behälteraufnahmen 4 abgesenkt werden können, haben alle verschlossenen Behälter 2 die Behälterbehandlungsmaschine 1 bereits verlassen. Vorteilhaft an diesen Varianten ist insbesondere, dass die offenen Behälter 2 sowohl im leeren, als auch im befüllten Zustand bis zur Abgabe an den Behälterauslauf 7.2 bzw. das Transportband 7 im selben, abgeschlossenen Hygienebereich verbleiben. Ebenfalls verbleiben die Behälter 2 auf Teilung, eine Pufferstrecke zwischen Füller und Verschließer ist nicht erforderlich, wodurch sich auch eine vorteilhaft kurze Wartezeit zwischen der Befüllung und dem Verschließen der Behälter 2 ergibt.

Weiterhin besteht die Möglichkeit, den Behandlungsstationen für eine Vorbehandlung der Behälter 2 anzuordnen, wobei diese den Füllstationen vorgelagert sind. Es können somit in einer Behälter-Behandlungsstrecke 8.1, 8.2 mit jeweils drei ersten und zweiten Behandlungsstationen 9.1a,b,c und 9.2a,b,c die unterschiedlichen Behälter 2a, 2b vorbehandelt, gefüllt und verschlossen werden.

### Bezugszeichenliste

- 1: Behälterbehandlungsmaschine
- 2: Behälter
- 2.1: Behälterboden
- 2.2: Behälterflansch
- 3: Transferstern
- 4: Behälteraufnahme
- 5: Gleitleiste
- 6: Behälterführung
- 7: Transportband
- 7.1: Behältereinlauf
- 7.2: Behälterauslauf
- 8.1: erste Behälter-Behandlungsstrecke
- 8.2: zweite Behälter-Behandlungsstrecke
- 9.1a,b,c: erste Behandlungsstationen
- 9.2a,b,c: zweite Behandlungsstationen
- 10: Behandlungskopf oder Füllelement
- 10.1: Füllrohr
- 11, 11a: Behälterträger
- 12, 12a: Hubelement
- 13: Produktleitung
- 14: Durchflussmesser
- 15: Füllgutkessel
- A: erste Drehrichtung des Transfersternes 3
- B: zweite Drehrichtung des Transfersternes 3
- C: Transportrichtung des Transportbandes
- FA: Füllelementachse
- MA: Rotationsachse
- M: Mittelebene

## Patentansprüche

1. Behälterbehandlungsmaschine zum Behandeln von Behältern (2a,b), beispielsweise zum Füllen von Behältern (2a,b) mit einem Füllgut, mit einem Behälteraufnahmen (4) aufweisenden Transportelement (3), welches um eine Rotationsachse (MA) drehbar angetrieben ist und mit welchem die über einen Behältereinlauf (7.1) zugeführten zu behandelnden Behälter (2a,b) zu Behandlungsstationen (9.1a,b,c, 9.2a,b,c) und nach einer dortigen Behandlung zu einem Behälterauslauf (7.2) förderbar sind,
**dadurch gekennzeichnet, dass** die Drehrichtung (A, B) des Transportelements (3) wählbar ist, dass in einer ersten Drehrichtung (A) des Transportelements jeweils zwischen dem Behältereinlauf (7.1) und dem Behälterauslauf (7.2) eine erste Behälter-Behandlungsstrecke (8.1) mit ersten Behandlungsstationen (9.1a,b,c) gebildet ist, dass in einer der ersten Drehrichtung entgegengesetzten zweiten Drehrichtung (B) des Transportelements jeweils zwischen dem Behältereinlauf (7.1) und dem Behälterauslauf (7.2) eine zweite Behälter-Behandlungsstrecke (8.2) mit zweiten Behandlungsstationen (9.2a,b,c) gebildet ist, und dass die ersten Behandlungsstationen sich von den zweiten Behandlungsstationen unterscheiden, so dass unterschiedliche Behandlungen von Behältern durchgeführt werden können.

2. Behälterbehandlungsmaschine nach Anspruch 1, **dadurch gekennzeichnet, dass** die ersten und zweiten Behandlungsstationen (9.1a,b,c, 9.2a,b,c) stationär sind.

3. Behälterbehandlungsmaschine nach Anspruch 1 oder 2, **dadurch gekennzeichnet, dass** die ersten Behandlungsstationen (9.1a,b,c) für die Behandlung erster Behälter (2a) und die zweiten Behandlungsstationen (9.2a,b,c) für die Behandlung zweiter Behälter (2b) ausgebildet sind.

4. Behälterbehandlungsmaschine nach einem der vorhergehenden Ansprüche, **dadurch gekennzeichnet, dass** die Behälteraufnahmen (4) des Transportelements (3) Aufnahmeelemente für die Aufnahme zumindest der ersten und zweiten Behälter (2a,b) aufweisen.

5. Behälterbehandlungsmaschine nach einem der vorhergehenden Ansprüche, **dadurch gekennzeichnet, dass** die ersten Behandlungsstationen (9.1a,b,c) Füll- und/oder Verschließstationen für die ersten Behälter (2a) und zweiten Behandlungsstationen (9.2a,b,c) Füll- und/oder Verschließstationen für die zweiten Behälter (2b) aufweisen.

6. Behälterbehandlungsmaschine nach einem der vorhergehenden Ansprüche, **dadurch gekennzeichnet, dass** die ersten und zweiten Behandlungsstationen (9.1a,b,c, 9.2a,b,c) austauschbar in der Behälterbehandlungsmaschine (1) gehalten sind.

7. Behälterbehandlungsmaschine nach Anspruch 6, **dadurch gekennzeichnet, dass** die ersten und zweiten Behandlungsstationen (9.1a,b,c, 9.2a,b,c) als lösbar an der Behälterbehandlungsmaschine (1) gehaltene Funktionsmodule ausgebildet sind.

8. Behälterbehandlungsmaschine nach einem der vorhergehenden Ansprüche, **gekennzeichnet durch** Mittel (12, 12a), mit denen die Behälter (2) während der Behandlung an den ersten und/oder zweiten Behandlungsstationen (9.1a,b,c, 9.2a,b,c) außer Eingriff mit dem Transportelement (3) gebracht werden.

9. Behälterbehandlungsmaschine nach einem der vorhergehenden Ansprüche, **dadurch gekennzeichnet, dass** wenigstens eine Behandlungsstation (9.1a,b,c, 9.2a,b,c) einen von einer Hubeinrichtung (12, 12a) betätigten Behälterträger (11, 11a) aufweist, der zum Anheben und Absenken des Behälters (2) zwischen einer unteren Position und einer oberen Position gesteuert bewegbar ist, wobei der Behälterträger beispielsweise für eine hängende Halterung des jeweiligen Behälters einen Behälterhalsring und/oder eine Standfläche für einen Behälterboden aufweist und/oder den Behälter (2) mittels einer Greifvorrichtung an dessen Umfang greift.

10. Behälterbehandlungsmaschine nach einem der vorhergehenden Ansprüche, **dadurch gekennzeichnet, dass** das Transportelement ein Transport- oder Transferstern (3) ist, der an seinem Umfang mehrere taschenartige und umfangsseitig offene Behälteraufnahmen (4) aufweist und/oder mit Greifelementen versehen ist, die bezogen auf die Rotationsachse (MA) in gleichen Winkelabständen voneinander (Teilungsabstand) vorgesehen sind.

11. Behälterbehandlungsmaschine nach einem der vorhergehenden Ansprüche, **dadurch gekennzeichnet, dass** jede Behälter-Behandlungsstrecke (8.1, 8.2) wenigstens zwei, bevorzugt mehr als zwei Behandlungsstationen (9.1a,b,c, 9.2a,b,c) aufweist, wobei die Anzahl der Behandlungsstationen beider Behälter-Behandlungsstrecken (8.1, 8.2) vorzugsweise gleich ist.

12. Behälterbehandlungsmaschine nach einem der vorhergehenden Ansprüche, **dadurch gekennzeichnet, dass** der Behältereinlauf (7.1) und der Behälterauslauf (7.2) von Abschnitten eines Transportbandes, vorzugsweise von Abschnitten eines gemeinsamen unter dem Transportelement (3) hindurchgeführten Transportbandes (7) gebildet sind, wobei vorzugsweise eine Mittelebene (M) der Transportbänder oder des gemeinsamen unter dem Transportelement (3) hindurchgeführten Transportbandes (7) die Rotationsachse (MA) einschließt.

13. Behälterbehandlungsmaschine nach einem der vorhergehenden Ansprüche, **dadurch gekennzeichnet, dass** die ersten und zweiten Behandlungsstationen (9.1a,b,c, 9.2a,b,c) wenigstens einen PET-Flaschenfüller, Glasflaschenfüller oder Keg-Füller oder Dosenfüller enthalten.

14. Behälterbehandlungsmaschine nach einem der vorhergehenden Ansprüche, **dadurch gekennzeichnet, dass** die ersten und zweiten Behandlungsstationen (9.1a,b,c, 9.2a,b,c) wenigstens einen Schraubverschließer, Kronkorker oder eine Siegelstation enthalten.

15. Anordnung zum Behandeln von Behältern mit wenigstens zwei in einer Förderstrecke parallel geschalteten Behandlungsmaschinen (1) nach einem der vorhergehenden Ansprüche.

16. Verfahren zum Behandeln von Behältern (2a,b), beispielsweise zum Füllen von Behältern mit einem Füllgut, wobei die zu behandelnden Behälter (2a,b) mit einem um eine Rotationsachse (MA) drehbar angetriebenen und Behälteraufnahmen (4) aufweisenden Transportelement (3) zu Behandlungsstationen (9.1a,b,c, 9.2a,b,c) gefördert werden, wobei die Drehrichtung (A, B) des Transportelementes (3) wählbar ist und in einer ersten Drehrichtung (A) des Transportelements zwischen einem Behältereinlauf (7.1) und einem Behälterauslauf (7.2) eine erste Behälter-Behandlungsstrecke (8.1) mit ersten Behandlungsstationen (9.1a,b,c) gebildet ist, und in einer der ersten Drehrichtung entgegengesetzten zweiten Drehrichtung (B) des Transportelements zwischen dem Behältereinlauf (7.1) und dem Behälterauslauf (7.2) eine zweite Behälter-Behandlungsstrecke (8.2) mit zweiten Behandlungsstationen (9.2a,b,c) gebildet ist, wobei die ersten Behandlungsstationen sich von den zweiten Behandlungsstationen unterscheiden, so dass unterschiedliche Behandlungen von Behältern durchgeführt werden, wobei durch die Steuerung der Drehrichtung des Transportelements (3) gesteuert wird, ob erste Behälter (2a) oder zweite Behälter (2b) behandelt werden.

## Claims

1. Container-processing machine for processing containers (2a,b), for example for filling containers (2a,b) with a filling material, with a transport element (3) having container-receiving means (4), which transport element is rotatably driven about an axis of rotation (MA) and by means of which transport element the containers (2a,b) to be processed, supplied via a container inlet (7.1) can be conveyed to processing stations (9.1a,b,c, 9.2a,b,c) and, after being processed there, are conveyed to a container outlet (7.2),
**characterised in that** the direction of rotation (A,B) of the transport element (3) can be selected, that in a first direction of rotation (A) of the transport element, in each case a first container-processing route (8.1) is formed between the container inlet (7.1) and the container outlet (7.2), with first processing stations (9.1a,b,c), that in a second direction of rotation (B) of the transport element, running in the opposite direction to the first direction of rotation, in each case a second container-processing route (8.2) is formed between the container inlet (7.1) and the container outlet (7.2), with second processing stations (9.2a,b,c), and that the first processing stations differ from the second processing stations, such that different processes of containers can be carried out.

2. Container-processing machine according to claim 1, **characterised in that** the first and second processing stations (9.1a,b,c, 9.2a,b,c) are stationary.

3. Container-processing machine according to claim 1 or 2, **characterised in that** the first processing stations (9.1a,b,c) are configured for the processing of first containers (2a) and the second processing stations (9.2a,b,c) are configured for the processing of first containers (2b).

4. Container-processing machine according to any one of the preceding claims, **characterised in that** the container-receiving means (4) of the transport element (3) comprise receiving elements for receiving at least the first and second containers (2a,b).

5. Container-processing machine according to any one of the preceding claims, **characterised in that** the first processing stations (9.1a,b,c) comprise filling stations and/or closing stations for the first containers (2a) and second processing stations (9.2a,b,c) comprise filling stations and/or closing stations for the second containers (2b).

6. Container-processing machine according to any one of the preceding claims, **characterised in that** the first and second processing stations (9.1a,b,c, 9.2a,b,c) are held such as to be exchangeable in the container processing machine (1).

7. Container-processing machine according to claim 6, **characterised in that** the first and second processing stations (9.1a,b,c, 9.2a,b,c) are configured as function modules held in a detachable manner in the container-processing machine (1).

8. Container-processing machine according to any one of the preceding claims, **characterised by** means (12, 12a) with which the containers (2) are brought out of engagement with the transport element (3) during the processing at the first and/or second processing stations (9.1a,b,c, 9.2a,b,c).

9. Container-processing machine according to any one of the preceding claims, **characterised in that** at least one processing station (9.1a,b,c, 9.2a,b,c) comprises a container carrier (11, 11a) actuated by a lifting device (12, 12a), which for lifting and lowering the container (2) can be moved in a controlled manner between a lower position and an upper position, wherein the container carrier comprises, for example for a suspended holding of the respective container, a container neck ring and/or a standing surface for a container base, and/or grips the container (2) at its circumference by means of a gripping device.

10. Container-processing machine according to any one of the preceding claims, **characterised in that** the transport element is a transport star or transfer star (3), which comprises at its circumference a plurality of container receivers (4) in the form of pockets and open on the circumference side, and/or is provided with gripper elements, which in relation to the axis of rotation (MA) are spaced at equal angular distances (division spacing) from one another.

11. Container-processing machine according to any one of the preceding claims, **characterised in that** each container-processing route (8.1, 8.2) comprises at least two, and preferably more than two, processing stations (9.1a,b,c, 9.2a,b,c), wherein the number of processing stations of both container-processing routes (8.1, 8.2) is preferably the same.

12. Container-processing machine according to any one of the preceding claims, **characterised in that** the container inlet (7.1) and the container outlet (7.2) are formed from sections of a transport band, preferably of sections of a common transport band (7) guided beneath the transport element (3), wherein preferably a middle plane (M) of the transport bands or of the common transport band (7) guided beneath the transport element (3) encloses the axis of rotation (MA).

13. Container-processing machine according to any one of the preceding claims, **characterised in that** the first and second processing stations (9.1a,b,c, 9.2a,b,c) contain at least one PET bottle filler, glass bottle filler, or keg filler or can filler.

14. Container-processing machine according to any one of the preceding claims, **characterised in that** the first and second processing stations (9.1a,b,c, 9.2a,b,c) contain at least one screw closing device, crown cork fitting device, or a sealing station.

15. Arrangement for the processing of containers, with at least two processing machines (1) according to any one of the preceding claims connected in parallel in a conveying route.

16. Method for the processing of containers (2a,b), for example for the filling of containers with a filling material, wherein the containers (2a,b) to be processed are conveyed by a transport element (3), rotatably driven about an axis of rotation (MA) and comprising container receivers (4), to processing stations (9.1a,b,c, 9.2a,b,c), wherein the direction of rotation (A,B) of the transport element (3) can be selected, and in a first direction of rotation (A) of the transport element, between a container inlet (7.1) and a container outlet (7.2), a first container-processing route (8.1) with first processing stations (9.1a,b,c) is formed, and in a second direction of rotation (B) of the transport element, in the opposite direction to the first direction of rotation, between the container inlet (7.1) and the container outlet (7.2), a second container-processing route (8.2) with second processing stations (9.2a,b,c) is formed, wherein the first processing stations differ from the second processing stations, such that different processes are carried out, wherein, by the controlling of the direction of rotation of the transport element (3), it can be controlled whether first containers (2a) or second containers (2b) are processed.

## Revendications

1. Machine de traitement de contenants servant à traiter des contenants (2a, b), par exemple servant à remplir d'un produit de remplissage des contenants (2a, b), avec un élément de transport (3) présentant des logements de contenant (4), lequel est entraîné de manière à pouvoir tourner autour d'un axe de rotation (MA) et à l'aide duquel les contenants (2a, b) à traiter amenés par l'intermédiaire d'une arrivée de contenant (7.1) peuvent être convoyés à des postes de traitement (9.1a, b, c, 9.2a, b, c) et, après un traitement effectué à cet endroit, à une sortie de contenant (7.2),
**caractérisée en ce que** la direction de rotation (A, B) de l'élément de transport (3) peut être choisie, que dans une première direction de rotation (A) de l'élément de transport, une première ligne de traitement de contenants (8.1) avec des premiers postes de traitement (9.1a, b, c) est formée respectivement entre l'entrée de contenant (7.1) et la sortie de contenant (7.2), que dans une deuxième direction de rotation (B) de l'élément de transport opposée à la première direction de rotation, une deuxième ligne de traitement de contenants (8.2) avec des deuxièmes postes de traitement (9.2a, b, c) est formée respectivement entre l'entrée de contenant (7.1) et la sortie de contenant (7.2), et que les premiers postes de traitement se différencient des deuxièmes postes de traitement de sorte que différents traitements de contenants puissent être effectués.

2. Machine de traitement de contenants selon la revendication 1, **caractérisée en ce que** les premiers et deuxièmes postes de traitement (9.1a, b, c, 9.2a, b, c) sont stationnaires.

3. Machine de traitement de contenants selon la revendication 1 ou 2, **caractérisée en ce que** les premiers postes de traitement (9.1a, b, c) sont réalisés pour le traitement de premiers contenants (2a) et les deuxièmes postes de traitement (9.2a, b, c) sont réalisés pour le traitement de deuxièmes contenants (2b).

4. Machine de traitement de contenants selon l'une quelconque des revendications précédentes, **caractérisée en ce que** les logements de contenant (4) de l'élément de transport (3) présentent des éléments de logement pour le logement au moins des premiers et deuxièmes contenants (2a, b).

5. Machine de traitement de contenants selon l'une quelconque des revendications précédentes, **caractérisée en ce que** les premiers postes de traitement (9.1a, b, c) présentent des postes de remplissage et/ou de fermeture pour les premiers contenants (2a) et les deuxièmes postes de traitement (9.2a, b, c), des postes de remplissage et/ou de fermeture pour les deuxièmes contenants (2b).

6. Machine de traitement de contenants selon l'une quelconque des revendications précédentes, **caractérisée en ce que** les premiers et deuxièmes postes de traitement (9.1a, b, c, 9.2a, b, c) sont maintenus de manière interchangeable dans la machine de traitement de contenants (1).

7. Machine de traitement de contenants selon la revendication 6, **caractérisée en ce que** les premiers et deuxièmes postes de traitement (9.1a, b, c, 9.2a, b, c) sont réalisés sous la forme de modules fonctionnels maintenus de manière amovible au niveau de la machine de traitement de contenants (1).

8. Machine de traitement de contenants selon l'une quelconque des revendications précédentes, **caractérisée par** des moyens (12, 12a), à l'aide desquels les contenants (2) sont retirés de l'élément de transport (3) au cours du traitement au niveau des premiers et/ou deuxièmes postes de traitement (9.1a, b, c, 9.2a, b, c).

9. Machine de traitement de contenants selon l'une quelconque des revendications précédentes, **caractérisée en ce qu'**au moins un poste de traitement (9.1a, b, c, 9.2 a, b, c) présente un porte-contenant (11, 11a), activé par un dispositif de levage (12, 12a), qui peut être déplacé de manière contrôlée afin de relever et d'abaisser le contenant (2) entre une position inférieure et une position supérieure, dans laquelle le porte-contenant présente, par exemple pour un maintien en suspension du contenant respectif, une collerette et/ou une surface de support pour un fond de contenant et/ou saisit le contenant (2) au niveau de sa périphérie au moyen d'un dispositif de préhension.

10. Machine de traitement de contenants selon l'une quelconque des revendications précédentes, **caractérisée en ce que** l'élément de transport est une étoile de transport ou de transfert (3), qui présente, au niveau de sa périphérie, plusieurs logements de contenant (4) de type compartiment et ouverts du côté de la périphérie et/ou qui est pourvue d'éléments de préhension, qui sont prévus à des distances angulaires identiques les uns des autres par rapport à l'axe de rotation (MA).

11. Machine de traitement de contenants selon l'une quelconque des revendications précédentes, **caractérisée en ce que** chaque ligne de traitement de contenants (8.1, 8.2) présente au moins deux, de manière préférée plus de deux postes de traitement (9.1a, b, c, 9.2a, b, c), dans laquelle le nombre des postes de traitement des deux lignes de traitement de contenants (8.1, 8.2) est de préférence égal.

12. Machine de traitement de contenants selon l'une quelconque des revendications précédentes, **caractérisée en ce que** l'entrée de contenant (7.1) et la sortie de contenant (7.2) sont formées par des segments d'une bande transport, de préférence par des segments d'une bande de transport (7) commune guidée de part en part sous l'élément de transport (3), dans laquelle de préférence un plan central (M) des bandes de transport ou de la bande de transport (7) commune guidée de part en part sous l'élément de transport (3) renferme l'axe de rotation (MA).

13. Machine de traitement de contenants selon l'une quelconque des revendications précédentes, **caractérisée en ce que** les premiers et deuxièmes postes de traitement (9.1a, b, c, 9.2a, b, c) contiennent au moins un système de remplissage de bouteilles en PET, un système de remplissage de bouteilles en verre ou un système de remplissage de fûts ou un système de remplissage de boîtes.

14. Machine de traitement de contenants selon l'une quelconque des revendications précédentes, **caractérisée en ce que** les premiers et deuxièmes postes de traitement (9.1a, b, c, 9.2a, b, c) contiennent au moins une capsuleuse à vis, une boucheuse ou un poste à sceller.

15. Ensemble servant à traiter des contenants avec au moins deux machines de traitement (1) montées en parallèle dans une ligne de convoyage selon l'une quelconque des revendications précédentes.

16. Procédé servant à traiter des contenants (2a, b), par exemple servant à remplir d'un produit de remplissage des contenants, dans lequel les contenants (2a, b) à traiter sont convoyés à des postes de traitement (9.1a, b, c, 9.2a, b, c) à l'aide d'un élément de transport (3) entraîné de manière à pouvoir tourner autour d'un axe de rotation (MA) et présentant des logements de contenant (4), dans lequel la direction de rotation (A, B) de l'élément de transport (3) peut être choisie et dans une première direction de rotation (A) de l'élément de transport, une première ligne de traitement de contenants (8.1) avec des premiers postes de traitement (9.1a, b, c) est formée entre une entrée de contenant (7.1) et une sortie de contenant (7.2), et dans une deuxième direction de rotation (B) de l'élément de transport opposée à la première direction de transport, une deuxième ligne de traitement de contenants (8.2) avec des deuxièmes postes de traitement (9.2a, b, c) est formée entre l'entrée de contenant (7.1) et la sortie de contenant (7.2), dans lequel les premiers postes de traitement se différencient des deuxièmes postes de traitement de sorte que différents traitements de contenants soient effectués, dans lequel le système de contrôle de la direction de rotation de l'élément de transport (3) permet de contrôler si des premiers contenants (2a) ou des deuxièmes contenants (2b) sont traités.
